# EUROPÄISCHE PATENTANMELDUNG

(11) **EP 1 531 317 A1**
(43) Veröffentlichungstag der Anmeldung: **18.05.2005**
(21) Anmeldenummer: 04405672.9
(22) Anmeldetag: 03.11.2004
(51) Int. Cl.: G01B 5/00, G01N 3/40

(54) **Verfahren zur Durchführung von Dicke- und Härtemessungen an Prüfkörpern und Drehteller und Wischereinheit hierfür**

(30) Priorität: 14.11.2003 CH 19582003
(71) Anmelder: Dr. Schleuniger Pharmatron AG, 4501 Solothurn (CH)
(72) Erfinder: Bracher, Martin, 3473 Alchenstorf (CH); Studer, Hans-Peter, 4583 Mühledorf (CH)
(74) Vertreter: Liebetanz, Michael

(57) **Zusammenfassung**

In der Aufnahmestation (1) werden in optischer Weise körperliche Masse des Prüfkörpers ermittelt. Dabei werden oblonge Prüfkörper in Nuten (13) und zylindrische Prüfkörper in V-Anschläge (14) eingelegt. Damit kann die optische Messung der Dicke durch Kenntnis der Geometrie des Prüfkörpers und die Messung der Härte durch Voreinstellung der Backen (62, 63) optimal vorbereitet werden, so dass die einzelnen Schritte schneller nacheinander ablaufen können. Dadurch ist eine grössere Anzahl von Prüfkörpern in kürzerer Zeit prüfbar.

## Beschreibung

Die Erfindung betrifft ein Verfahren zur Durchführung von Messungen an Prüfkörpern, insbesondere ein Verfahren zur Dickenmessung von Tabletten und einen Drehteller für eine Vorrichtung zur Durchführung des Dickenmessverfahrens. Ferner betrifft die Erfindung ein Verfahren zur Härtemessung von Tabletten und eine Wischereinheit für eine Vorrichtung zur Durchführung des Härtemessverfahrens.

Aus dem Stand der Technik ist es bei der Prüfung von Tabletten notwendig, verschiedene Arbeitsschritte im Hinblick auf Messungen von körperlichen Eigenschaften von solchen Prüfkörpern durchzuführen. Dazu gehören insbesondere die Dickenmessung, die Gewichtsmessung und die Härtemessung.

Die Dickenmessung ist ein schwieriges technisches Gebiet, da es eine Vielzahl von verschiedenen Tablettenformen gibt, die teilweise mit einem Trennspalt oder Kennzeichen versehen sind. Daher sind Tablettendickenprüfer mit einem manuellen Stempel in Benutzung, bei denen der Benutzer den entsprechenden Dickenmessort auf der Tablette selbst aussucht. Darüber hinaus sind gelatinöse Tabletten zu prüfen, bei denen diese Kontaktmessverfahren bis jetzt versagen oder unzuverlässige Ergebnisse liefern.

Aus der Prüfung von Tabletten in anderen technischen Bereichen, wie dem Nuklearbereich, ist beispielsweise aus der EP 0 528 197 ein optisches Erfassungssystem bekannt, bei dem Tabletten, die in Gestalt von kleinen Zylindern vorliegen, sich drehend an einem Schlitz vorbeigeschickt werden, wobei durch die Abschattung und Streueigenschaften auf die Umrisse der Tablette geschlossen wird. Eine solche Vorrichtung ist wegen der anderen stofflichen Zusammensetzung von oral zu konsumierenden Tabletten in der Prüfung von diesen nicht einsetzbar.

Die US 4,884,463 beschreibt ein Karussell mit verschiedenen Arbeitsstationen, insbesondere einer Wiegestation, einer Dickenmessstation und einer Härtemessstation. Der Drehteller ist durch einzelne radial angeordnete Ausnehmungen unterteilt, beispielsweise fünf Ausnehmungen für die drei Messstationen sowie eine Zuführungs- und eine Entleerungsstation. Die Ausnehmungen sind zur Drehtellermitte hin durch eine entlang dem Kreis ausgerichtete Anschlagswand begrenzt, eine zur Mündung der Ausnehmung führende Wand ist im wesentlichen radial ausgerichtet und die gegenüberliegende Wand ist eine konkave Wand aus zwei geraden Segmenten, die ein seitlich ausgerichtetes V bilden. Die drei Messstationen sind im Zusammenhang mit dem Karussell angeordnet, so dass sich dadurch mechanische Zwänge ergeben, die eine quantitative oder qualitative Verbesserung der Messung schwierig machen. Die Vorrichtung ist eine Revolvervorrichtung, in der alle Funktionen an einem Ort um die Drehachse angeordnet sind.

Die EP 0 983 495 beschreibt ein weiteres Verfahren zur Durchführung eines Härtetests an einem Prüfkörper, bei dem die Lage des Prüfkörpers auf optischem, elektronischem oder akustischem Weg durch Ermittlung der Vorzugsachse festgestellt wird. Anschliessend wird die den Härtetest durchführende Einrichtung so gedreht, dass die Druckkolben in der besagten Vorzugsrichtung auf den Prüfkörper einwirken. Diese Einstellung für nur eine Messstation ist auf Grund der Langsamkeit des Messverfahrens nachteilig.

Ausgehend von diesem Stand der Technik liegt der Erfindung die Aufgabe zugrunde, ein Verfahren und eine Vorrichtung der eingangs genannten Art jeweils so zu verbessern, dass die entsprechend Prüfung sicherer und schneller ablaufen kann, wobei der die Prüfung vorbereitende Nutzer darin optimal unterstützt wird.

Diese Aufgabe wird für ein Verfahren der Dickenmessung mit den Merkmalen des Anspruchs 1 gelöst. Ein Drehteller einer erfindungsgemässen Vorrichtung ist durch die Merkmale des Anspruchs 5 gekennzeichnet.

Durch Kenntnis der Geometrie des Prüfkörpers kann die optische Messung der Dicke und die Messung der Härte durch Voreinstellung der Backen optimal vorbereitet werden. Gleichzeitig kann nach der Härtemessung der Prüfkörper schneller entsorgt werden.

Dadurch, dass in der Aufnahmestation in optischer Weise körperliche Masse des Prüfkörpers ermittelt werden, kann die Messung der Dicke oder der Härte optimal vorbereitet werden, so dass die einzelnen Schritte schneller nacheinander ablaufen können. Dadurch ist eine grössere Anzahl von Prüfkörpern in kürzerer Zeit prüfbar.

Weitere vorteilhafte Ausführungsbeispiele sind in den Unteransprüchen gekennzeichnet.

Die Erfindung wird nun unter Bezugnahme auf die Zeichnungen beispielhaft näher beschrieben. Es zeigen:
- Fig. 1: eine perspektivische Gesamtansicht einer Vorrichtung zum Testen von Prüfkörpern, insbesondere Tabletten oder Pillen, mit fünf Stationen,
- Fig. 2: eine perspektivische Ansicht eines Tellers zur Aufnahme der Prüfkörper an einer Beladestation,
- Fig. 3: eine perspektivische Ansicht einer kombinierten Verschiebe- und Messeinheit zur Bewegung und Messung der Prüfkörper zwischen den einzelnen Stationen bzw. an einer Dickenmessstation, und

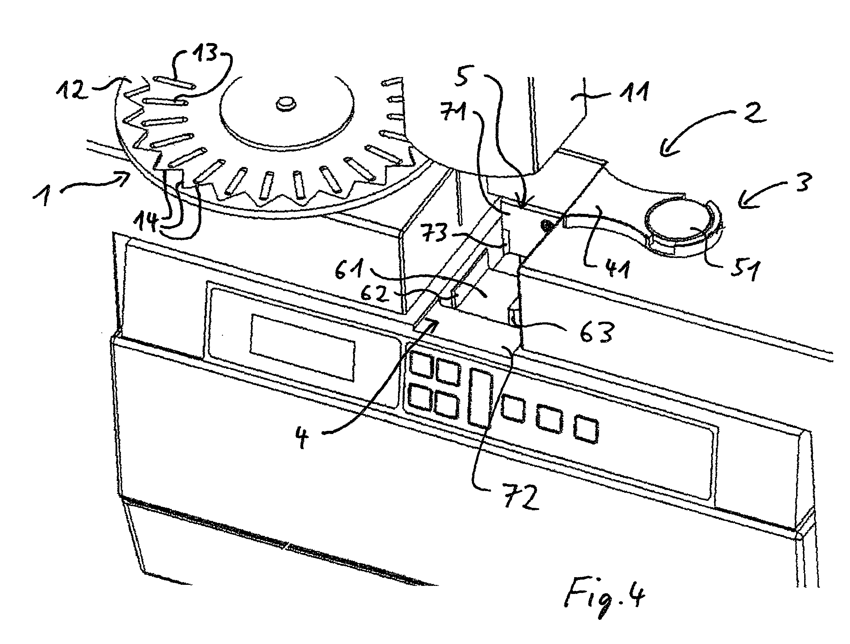

- Fig. 4: eine perspektivische vergrösserte Teilansicht der Vorrichtung nach Fig. 1 zum Testen von Prüfkörpern, insbesondere Tabletten oder Pillen, mit fünf Stationen.

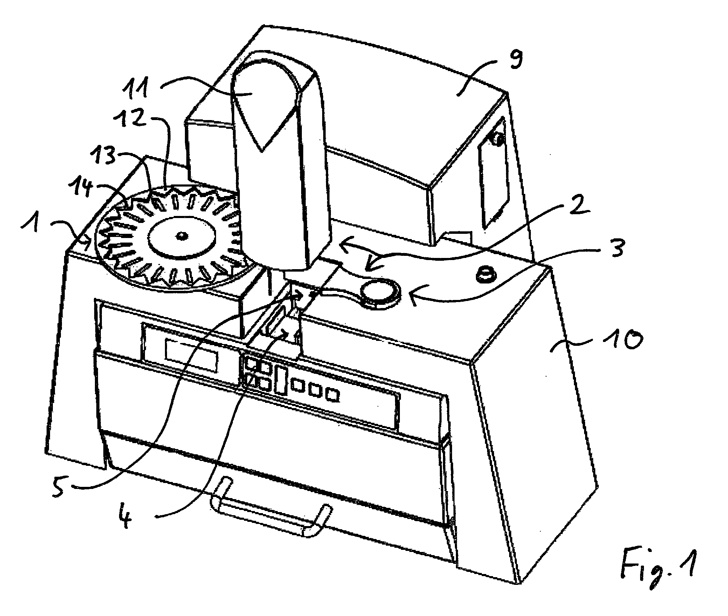

Die Fig. 1 zeigt eine perspektivische Gesamtansicht einer Vorrichtung 10 zum Testen von Prüfkörpern, insbesondere Tabletten oder Pillen, mit fünf Stationen. Es sind dies die Beladestation 1, die Dickenmessstation 2, die auch den beweglichen Arm 11 umfasst, die Wiegestation 3, die Härtemessstation 4 und die Entladestation 5. Das verbindende Element der Stationen ist der bewegliche Arm 11.

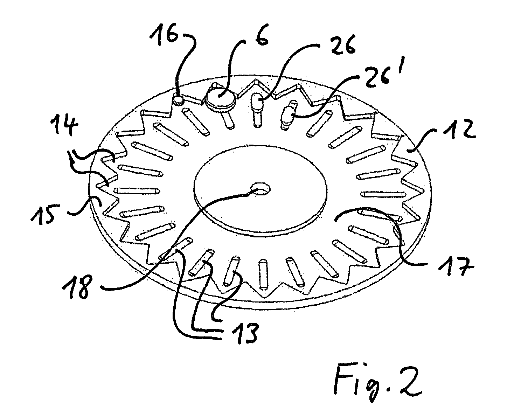

Die Beladestation 1 verfügt über einen Drehteller 12 mit radialen Nuten 13 und V-förmigen Aufnahmen 14 in Verlängerung der besagten Nuten 13. Die Ausgestaltung und Wirkungsweise des Drehtellers 2 ist genauer in der Fig. 2 und in Verbindung mit der Beschreibung dieser Fig. festgehalten.

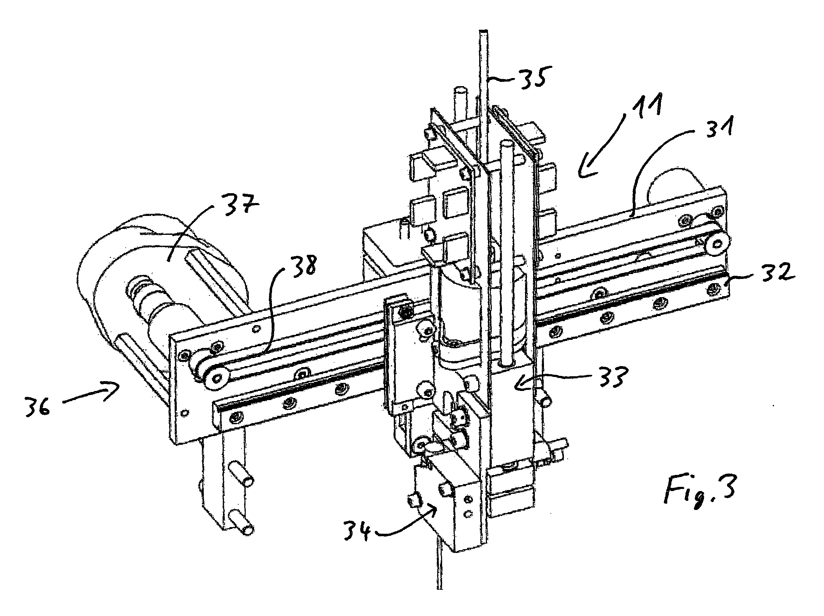

Der bewegliche Arm 11 ist an dem Gestellkörper 9 der Vorrichtung 10 beweglich befestigt. Die Ausgestaltung und Wirkungsweise des beweglichen Arms 11 ist genauer in der Fig. 3 und in Verbindung mit der Beschreibung dieser Fig. festgehalten.

Die Fig. 2 zeigt eine perspektivische Ansicht eines Tellers zur Aufnahme der Prüfkörper 6, 16 an einer Beladestation 1. Es sind zwei verschieden grosse Prüfkörper 6 bzw. 16 dargestellt, bei denen es sich hier beispielhaft um zylindrische Tabletten mit zwei unterschiedlichen Durchmessern handelt. Der Teller 12 ist rund und verfügt über eine vertiefte Beladungsfläche 17. Auf dieser Fläche 17 sind vorzugsweise radiale längliche Vertiefungen 13 vorgesehen, in die längliche Prüfkörper 26 einlegbar sind. Dabei kann es sich beispielsweise um eine Verabreichungsform von Medikamenten handeln, die als Kapsel oder Oblongs bezeichnet werden. Diese Kapseln sind üblicherweise ein zylindrischer Rotationskörper mit halbkugelförmigen Enden. Durch die genutete Form der Vertiefungen 13 sind solche Kapseln in einfacher Weise immer an derselben radialen Stelle des Tellers 12 einlegbar. Die genaue Position ist durch den unten beschriebenen Messvorgang feststellbar und es können somit Verschiebungen in der Position, beispielsweise wie mit den Oblongs 26 und 26' in Fig. 2 dargestellt, unterschieden werden. Die Nuten 13 können auch im mittleren Teil breiter sein, um einen stabilen tieferliegenden Lagerpunkt zu bilden.

Die zylindrischen Prüfkörper 6 oder 16 können in eine der hier vierundzwanzig Aufnahmen 14 eingelegt werden. Dies kann durch einfache Auflage auf die ebene Fläche 17 und ein anschliessenden Verschieben gegen die V-förmige Aufnahme 14 erreicht werden. Dadurch ist es möglich, unterschiedlich grosse Prüfkörper 6, 16 in dem Sinne zentriert auf dem Teller anzuordnen, als dass die Medianebene der Prüfkörper 6, 16 mit der Achse übereinstimmt, die durch die Nutenmitte der Nuten 13 und der Spitze der V-förmigen Aufnahme hindurchgeht. Die Prüfkörper 6, 16 verbleiben an dem eingelegten Ort, da der erhöhte Rand 15 ein Herausfallen der Prüfkörper 6, 16 verhindert.

Der Teller 12 weist ein zentrales Loch 18 auf, um auf einem angetriebenen Zapfen aufsteckbar zu sein. Dies ermöglicht ein Beladen der Teller 12 vorab und ein anschliessendes Einsetzen derselben auf dem Antrieb. Die Anzahl der Aufnahmen 14 / Nuten 13 kann auch anders gewählt sein, die V-förmige Aufnahme kann auch U-förmig sein, es ist jeweils eine ausgerichtete Anordnung einer grossen Zahl von Prüfkörpern 6, 16 je Charge möglich, bei denen es sich zudem gleichzeitig um unterschiedlichste Prüfkörper 6, 16, 26 oder andere handeln kann. In der Regel wird eine Charge aber mit jeweils identischen Prüfkörpern bestückt.

Die Fig. 3 zeigt eine perspektivische Ansicht der in der Fig. 1 als beweglicher Arm 11 bezeichneten kombinierten Verschiebe- und Messeinheit zur Bewegung und Messung der Prüfkörper zwischen den einzelnen Stationen bzw. an einer Dickenmessstation. Die Grundplatte 31 ist im Gestellkörper 9 integriert und befestigt. An dieser Grundplatte 31 sind Führungselemente wie hier eine Führungsschiene 32 vorgesehen. An der Grundplatte 31 und insbesondere über die Führungsschiene 32 geführt ist die Verschiebeeinheit 33 und die Messeinheit 34.

Bei der Verschiebeeinheit 33 handelt es sich hier um eine konventionelle Ansaugeinrichtung, mit einem nach unten gerichteten weichen Mund, der entlang der beispielsweise durch die Stange 35 vorgegebenen Bewegungsrichtung in Richtung eines Prüfkörpers 6, 16 abgesenkt werden kann, um diesen durch Erzeugen eines Unterdruckes im Bereiches des Mundes aufzunehmen.

Die Messeinheit 34 ist von dieser Verschiebeeinheit 33 getrennt angeordnet, das heisst, die Messeinheit 34 bewegt sich nicht mit der Verschiebeeinheit 33 in Richtung der durch die Stange 36 vorgegeben Achse. Die Messeinheit 34 kann sich aber auch mit der Verschiebeeinheit 33 in dieser Richtung bewegen, wobei die durch die Messeinheit vorzunehmenden Messungen dann vorzugsweise in der Höhenposition ausgeführt werden, in der sich der bewegliche Arm im grossen Höhenabstand von Drehteller 12 und anderen Elementen befindet.

An der Grundplatte ist eine im wesentlichen horizontal arbeitende Verschiebeeinrichtung 36 vorgesehen, wobei ein Antrieb 37 ein Riemenband 38 antreibt, welches horizontal zwischen den beiden Endbereichen der Platte 31 gespannt ist. Es kann sich dabei auch um eine Zahnkette handeln. Auch könnte alternativ ein Schrittmotor in dem beweglichen Arm 11 integriert sein. Wesentlich ist, dass der bewegliche Arm 11 mit Verschiebeeinheit 33 (über den Ansaugkopf für Prüfkörper) und Messeinheit 34 (hier ein Lasersensor) im wesentlichen horizontal beweglich ist. Dies bedeutet, dass die beiden Einheiten 33 und 34 über dem in der Fig. 1 rechts dargestellten Bereich des Drehtellers 12 angeordnet sind und dabei in radialer Richtung über diesen fahren können, und dass weiter die beiden Einheiten 33, 34 über die hier abgesenkten Messstationen 4 und 5 hinweg zu der Auflagefläche der Messstation 2 und der Wiegefläche der Station 3 verfahrbar sind, so dass die mit dem Ansaugkopf aufgenommenen Prüfkörper 6, 16, 26 zwischen allen Stationen 1, 2, 3, 4, 5 bewegbar sind. Für die Messeinheit kommen Vorrichtungen zum Einsatz die eines der verschiedenen berührungslosen Messverfahren beherrschen, wie Ultraschall oder Laserreflexionssensoren.

Die Messeinheit 34 ist insbesondere ein Lasersensor (hier der Laser-Distanzsensor OADM 12I6430/S35A der Firma Baumer electric), der beim Einsatz über der Ladestation 1 einen Laserstrahl im wesentlichen rechtwinklig zur Oberfläche 17 des Tellers 12 ausstrahlt, welcher von den entsprechenden Oberflächen (Oberfläche 17; Prüfkörper 6, Randfläche 15) reflektiert wird. Durch Aufnahme des zurückreflektierten und -gestreuten Signals ist der Abstand des Reflektionspunktes ermittelbar. Der bewegliche Arm 11 wird längs über die Tablette gefahren, das heisst in Richtung von der Spitze der V-förmigen Aufnahme 14 fluchtend zur Mittelebene der Nut 13, mit anderen Worten entlang des Radius. Somit wird Dank der Zentrierung des Prüfkörpers 6, 16 (in 14) oder der ovaloiden oder oblongen Tablette (in 13) das jeweilige Mittenprofil abgefahren. Damit ist der Durchmesser beziehungsweise die Länge der Tablette direkt ermittelbar. Dieses Wissen kann auch in der Härtemessstation 4 eingesetzt werden. Mit dieser Messung sind automatisch bestehende Querrillen oder Einprägungen erkennbar. Dies ist deshalb von Vorteil, weil so der Ansaugkopf 33 neben solchen Prägungen auf einen flachen oder nur leicht gerundeten Abschnitt einer Tablette aufsetzen kann. Damit wird vermieden, dass das Ansaugen fehlschlägt und/oder dass die Tablette durch ein Verrutschen der angesaugten Tablette über eine solche Rille oder Einprägung in eine Fehllage gelangt.

Sofern nur eine Richtung (entlang dem Radius) abgefahren wird, ist es notwendig, dass sichergestellt ist, dass allfällige Rillen quer oder zumindest geneigt zur Abtastrichtung verlaufen. Bei einer zweidimensionalen Abtastung entfällt dieses Erfordernis. Dies kann dadurch bewerkstelligt werden, dass der Lasersensor 34 vor endgültiger Drehung des Drehtellers in eine neue Position an einen bestimmten Ort in einem definierten Abstand von der Mitte des Drehtellers 12 verfahren wird, so dass bei einer anschliessenden Drehung des Drehtellers 12 der Prüfkörper 6, 16, 26 von dem Lasersensor quer abgetastet wird.

Der Einsatz eines Lichtsensors allgemein und eines Lasersensors im speziellen erlaubt auch die einfache Kodierung der Drehteller 12, entweder durch ein bestimmtes Lochmuster oder bestimmtes Reflektionsverhalten in verschiedenen Bereichen etc.. Der Lichtsensor kann durch das Abtasten eines Ortes für einen Prüfkörper 6 in dem Drehteller 12 zudem festgestellt werden, ob in einer vorgegebenen Aufnahme 14 überhaupt ein Prüfkörper 6, 16, 26 vorhanden ist, oder ob der Aufnahmeschritt bei dieser Stellung übersprungen werden kann, sofern auch die Nut 13 leer ist. Bei oblongen Prüfkörpern ist es wesentlich, diese zentral in die Nut 13 einzulegen; die tatsächliche radiale Position in der Nut 13 ist dagegen ohne Belang, da der Lichtsensor eine geeignete Aufnahmestelle durch das Abtasten oder Abscannen findet. Durch das Abtasten der oblongen Prüfkörper 26 in radialer Richtung kann schon auf dem Prüfteller 12 deren Länge festgestellt werden, womit durch eine Rechnung direkt die Mitte des Prüfkörpers 26 feststellbar ist.

Der Saugkopf 33 berührt die Oberfläche eines Prüfkörpers 6, 16, 26 und wendet dabei kontinuierlich oder nur während der durchzuführenden Verschiebung einen Unterdruck an. Dann kann der bewegliche Arm 11 in seiner Höhe verstellt und in der Richtung entlang der Schiene 32 verfahren werden. Dadurch wird der Prüfkörper in Richtung der Dickenmessstation 2 oder der Wiegestation 3 bewegt. Die Reihenfolge der Abarbeitung der Stationen 2, 3 ist nicht wesentlich mit Ausnahme, wenn eine Dickenmessung spezieller Prüfkörper durchzuführen ist, die keine Fläche aufweisen und daher abkippen, wenn sie nicht seitlich gehalten werden. Hier wird eine Kulisse eingesetzt, die auf die Dickenmessplattform aufgesetzt wird. Diese Kulisse verfügt über eine der Tablette angepassten Aussparung, die für den Vorgang der Dickenmessung verhindert, dass die Tabelle abkippt.

Beim hier dargestellten Ausführungsbeispiel wird davon ausgegangen, dass der Saugkopf den Prüfling 6, 16, 26 im wesentlichen mittig zuerst auf der ebenen Messplattform 41 der Dickenmessstation 2 ablegt. Dann wird der Lichtsensor über den gesamten Prüfkörper 6, 16 verfahren, so dass in dem Bereich des Einfalls des Lichtes auf die Messplattform ein Referenzwert für den Boden und durch Minimumbildung des Abstandes die Höhe des höchsten Punktes über dem Boden der Messplattform 41 feststellbar ist, was genau der maximalen Dicke des Prüflings entspricht. Alternativ kann auch vor dem Ablegen des Prüflings oder nach dem erneuten Abheben des Prüflings von der Messplattform 41 der Sensor an die Stelle verfahren werden, an der der höchste Punkt gemessen worden ist, um an dieser Stelle den Abstand von der Messplattform 41 gesondert zu ermitteln.

Gleichzeitig kann die Steuerung beim Überstreichen des Messfensters auf der Messplattform 41 durch Streulichtmessung feststellen, ob eventuelle abgeplatzte Tablettenreste oder andere Teilchen die Messplattform 41 verschmutzen und die Messung verfälschen.

Anschliessend wird nach einem erneuten Ansaugen des Prüfkörpers dieser von der Messplattform 41 abgehoben und zur Wiegestation 3 bewegt und dort auf der Wiegeplattform 51 abgelegt, die mit einer darunter angeordneten Waage verbunden ist.

Nach dem Wiegevorgang wird nach einem letzten Ansaugen des Prüfkörpers 6 dieser auf die Härtetestplattform 61 der Härtemessstation 4 abgelegt. Hier fährt beim Messschritt die Backe 62 auf den Anschlag 63 zu und zerquetscht den Prüfkörper 6. Dabei wird vorteilhafterweise die vorab auf dem Drehteller 12 gemessene Länge an die Härtemessstation 4 übermittelt, so dass die Backe 62 schon vor dem Absetzen des Prüfkörpers 6 nahe bis an den Berührpunkt verfahren werden kann, so dass die Härtemessung nach einem kleinen Zusammenfahren der Backen direkt durchgeführt werden kann. Diese Vorgehensweise ist auch möglich, wenn an Stelle eines Anschlages 63 eine zweite Backe vorgesehen wäre,

Nach der Härtemessung befinden sich Tablettenreste auf der Härtetestplattform 61 der Härtemessstation 4. Diese werden durch den Wischer 71 beispielsweise in die Öffnung 72 weggewischt, so dass die Härtemessstation 4 für die nächste Messung frei ist.

## Patentansprüche

1. Verfahren zur Durchführung von Messungen an Prüfkörpern, wobei die Messung insbesondere aus der Gruppe der Dickenmessverfahren, der Wiegeverfahren und der Härtemessverfahren stammt, die in einer entsprechenden Messstation (2, 3, 4) durchführbar ist, mit einer Aufnahmestation (1), die über einen die Prüflinge (6, 16) in definierter Lage aufnehmenden Drehteller (12) verfügt, **dadurch gekennzeichnet, dass** ein beweglicher Lichtsensor (34) vorgesehen ist, dessen Lichtsignal mindestens in bezüglich dem Drehteller (12) radialer Richtung über die Prüfkörper (6, 16) zur Ermittlung des Vorhandenseins und/oder der Position und/oder Länge und/oder des Durchmessers verfahrbar ist, wobei der Drehteller (12) über Mittel (13, 14) zur Positionierung der Hauptachse der Prüfkörper (6, 16) auf einer Radiusstrecke verfügt, und dass in definierter Zuordnung zu dem Lichtsensor (34) ein Aufgreifmittel (34) vorgesehen ist, mit dem jeweils ein Prüfkörper (6, 16) von dem Drehteller (12) abhebbar ist, um ihn einer der besagten Messstationen (2, 3, 4) definiert abzulegen.

2. Verfahren nach Anspruch 1, **dadurch gekennzeichnet, dass** die Dickenmessstation (2) eine Messplattform (41) aufweist und dass der besagte Lichtsensor (34) den relativen Abstand der Messplattform (41) vom Lichtsensor (34) und durch Abtasten des Prüfkörpers (6, 16) über die Medianlinie dessen minimalen Abstand zu dem Lichtsensor (34) ermittelt, um dann durch Differenzbildung der beiden Abstände die maximale Dicke des Prüfkörpers (6, 16) zu ermitteln.

3. Verfahren nach Anspruch 1 oder 2, **dadurch gekennzeichnet, dass** die Wiegestation (3) eine Messplattform (51) aufweist, die als Waage ausgebildet ist, und dass der Verfahrensschritt des Wiegens das Absetzen des Prüfkörpers (6, 16) auf der Messplattform (51), das Erfassen des durch den Prüfkörper (6, 16) verursachten höheren Gewichts von Messplattform (51) und Prüfkörper (6, 16) und das Abheben des Prüfkörpers (6, 16) zur Weiterleitung an eine weitere Arbeitsstation (2, 4, 5) umfasst.

4. Verfahren zur Durchführung von Messungen an Prüfkörpern mit mindestens einer Aufnahmestation (1) und einer Härtemessstation (4) mit den Verfahrensschritten nach einem der Ansprüche 1 bis 3.

5. Drehteller (12) für eine Vorrichtung zur Durchführung eines Dickenmessverfahrens nach einem der Ansprüche 1 bis 3, mit regelmässig in Umfangsnähe angeordneten Aufnahmen (13, 14) für die Prüfkörper (6, 16), **dadurch gekennzeichnet, dass** jede Aufnahme (13, 14) über eine radiale Vertiefung (13) zur stabilen Aufnahme von oblongen Prüfkörpern und über einen auf eine Radiuslinie zentrierenden Anschlag (14) für zylindrische Prüfkörper (6, 16) verfügt.
